(19) Europäisches Patentamt

European Patent Office

Office européen des brevets

(11) **EP 1 080 131 B1**

(12) **EUROPÄISCHE PATENTSCHRIFT**

(45) Veröffentlichungstag und Bekanntmachung des Hinweises auf die Patenterteilung:
**13.04.2005 Patentblatt 2005/15**

(21) Anmeldenummer: **99923572.4**

(22) Anmeldetag: **11.05.1999**

(51) Int Cl.$^{7}$: **C08G 75/02**, C08G 75/20

(86) Internationale Anmeldenummer:
**PCT/EP1999/003215**

(87) Internationale Veröffentlichungsnummer:
**WO 1999/061513 (02.12.1999 Gazette 1999/48)**

(54) **VERFAHREN ZUR HERSTELLUNG VON POLYARYLENSULFONEN**

METHOD FOR PRODUCING POLYARYLENE SULFONES

PROCEDE DE PRODUCTION DE POLYARYLENESULFONES

(84) Benannte Vertragsstaaten:
**DE FR GB IT**

(30) Priorität: **25.05.1998 DE 19823224**

(43) Veröffentlichungstag der Anmeldung:
**07.03.2001 Patentblatt 2001/10**

(73) Patentinhaber: **Ticona GmbH**
**65451 Kelsterbach (DE)**

(72) Erfinder:
- **KRATZ, Thomas**
  **D-82049 Pullach (DE)**
- **KAGERMEIER, Sonja**
  **D-82041 Deisenhofen (DE)**
- **ZEISS, Werner**
  **D-82547 Eurasburg (DE)**

(74) Vertreter: **Huber, Bernhard, Dipl.-Chem. et al**
**Weickmann & Weickmann,**
**Patentanwälte,**
**Postfach 86 08 20**
**81635 München (DE)**

(56) Entgegenhaltungen:
**EP-A- 0 623 641         EP-A- 0 827 977**
**DE-A- 1 938 806         GB-A- 1 365 486**

- **GABLER R ET AL: "NEUE POLYPHENYLENSULFONE REAKTIONEN AN FESTEN POLYMEREN" CHIMIA, Bd. 28, Nr. 9, 1. September 1974 (1974-09-01), Seiten 567-575, XP002024564 ISSN: 0009-4293 in der Anmeldung erwähnt**

**Beschreibung**

Die Erfindung betrifft ein Verfahren zur Herstellung von Polyarylensulfonen durch Oxidation von Gemischen aus Polyarylensulfiden, Polyarylensulfoxiden und Polyarylensulfonen in Gegenwart eines Oxidationsmittels und eines Suspensions- oder/und Lösungsmittels.

Polyarylensulfone zählen zu den Hochleistungskunststoffen und zeichnen sich insbesondere durch hohe Festigkeit, Steifheit und Härte in einem weiten Temperaturbereich, gute Wärmeformbeständigkeit, gute Beständigkeit gegen Chemikalien- und Strahlungseinflüsse, gute Flammenwidrigkeit, hohe Transparenz sowie hohe Schmelzviskositäten und Verarbeitungstemperaturen aus. Sie werden deshalb insbesondere zur Herstellung von transparenten Formteilen für hohe mechanische, elektrische und thermische Beanspruchungen, insbesondere in den Bereichen der Elektroindustrie, im Geräte- und Apparatebau sowie im Fahrzeug- und Flugzeugbau eingesetzt.

Polysulfone können durch Polykondensation des Natriumsalzes von Bisphenol A mit 4,4'-Dichlorsulfonyldiphenylmethan hergestellt werden. Großtechnische Verfahren zur Herstellung von Polyarylensulfonen gehen oftmals von den entsprechenden Polyarylensulfiden aus. So beschreibt die DE 196 36 692 A1 ein Verfahren zur Herstellung von Polarylensulfonen durch Oxidation von Polyarylensulfiden unter vermindertem Druck. Bei Verwendung von Essigsäure oder Ameisensäure, gegebenenfalls unter Zusatz von Schwefelsäure, und Wasserstoffperoxid als Oxidationsmittel wird dabei das Polyarylensulfid zu einem Gemisch aus Polyarylensulfid, Polyarylensulfoxid und Polyarylensulfon oxidiert. Der Gesamtoxidationsgrad liegt bei diesem Verfahren bei maximal 81 %. Vollständig oxidiertes Polyarylensulfon kann nicht erhalten werden.

Weiterhin beschreibt die DE 196 36 692 die Oxidation von Polyarylensulfiden zu Polyarylensulfonen mit Wasserstoffperoxid in konzentrierter Schwefelsäure. Da aufgrund des gebildeten Polyarylensulfons die Viskosität der Reaktionslösung ansteigt, wird bei dem in DE 196 36 692 beschriebenen Verfahren jedoch eine große Menge konzentrierter Schwefelsäure benötigt(etwa50:1 Gewichtsteile Schwefelsäure:Poly-1,4-phenylen-sulfid). Diese große Menge Schwefelsäure ist notwendig, da das Reaktionsgemisch gemäß DE 196 36 692 A1 ansonsten nicht mehr homogen und rührfähig wäre. Dadurch fällt aber bei diesem Verfahren eine große Menge an $H_2SO_4$-Abfall an. Ein weiterer Nachteil des in DE 196 36 692 A1 beschriebenen Verfahrens ist, daß die freiwerdende Reaktionsenergie durch Arbeiten in der Siedehitze bei vermindertem Druck aufgefangen wird, um Temperaturschwankungen zu vermeiden. Bei Verwendung eines verminderten Drucks besteht jedoch die Gefahr, daß als Oxidationsmittel zugesetztes Wasserstoffperoxid in die Gasphase gelangen kann. Zusätzlich zu den genannten Nachteilen wird mit dem Verfahren gemäß DE 196 36 692 kein vollständig oxidiertes Polyarylensulfon erhalten.

Ein ähnliches Verfahren wird von Gabler et al., Chimia 28, 567 (1974) beschrieben, wobei als Ausgangsmaterialien aromatische Polythioether verwendet werden, die entlang der Polymerkette regelmäßig angeordnete Sulfongruppen aufweisen, und in festen Suspensionen oxidiert werden. Auch bei diesem Verfahren sind große Mengen an Schwefelsäure erforderlich. DE-A 1 938 806 betrifft ein gegebenenfalls zweistufes Verfahren zur Herstellung von linearen Polyarylensulfonen, ausgehend von einem spezifischen Sulfonylgruppen-haltigen Polyarylensulfid. Diese Verfahren sind ebenfalls mit den oben genannten Nachteilen behaftet.

Aufgrund der Anwendung von Polyarylensulfonen in Hochtemperaturkunststoffen, etwa für Motoren, ist es bei Verfahren ausgehend von Polyarylensulfiden notwendig, daß eine vollstandige Oxidation zum Polyarylensulfon stattgefunden hat, da sonst Probleme bei der Verarbeitung auftreten können. So verursachen nicht vollständig oxidierte Reste von Polyarylensulfid und/oder Polyarylensulfoxid selbst in der Größenordnung von 1 bis 2 Gew.-% Probleme bei den üblichen Verarbeitungstemperaturen von etwa 350 °C, wobei insbesondere ein erheblicher Massenverlust von etwa 10 bis 12 Gew.-% in Form von Schwefeloxidgasen auftritt. Mit den bisherigen Verfahren konnte jedoch eine vollständige Oxidation nicht erhalten werden.

Es war daher eine Aufgabe der vorliegenden Erfindung, die Nachteile der bekannten Verfahren zumindest teilweise zu vermeiden und ein Verfahren bereitzustellen, mit dem ein vollständig oxidiertes Polyarylensulfon hergestellt werden kann.

Diese Aufgabe wird erfindungsgemäß gelöst durch ein Verfahren zur Herstellung von Polyarylensulfonen, welches dadurch gekennzeichnet ist, daß man ein Gemisch, umfassend Polyarylensulfide, Polyarylensulfoxide und Polyarylensulfone, welches, bezogen auf Polyarylensulfid, einen Oxidationsgrad von mindestens 30 % aufweist, mit einem Oxidationsmittel und einem Suspensions- oder/und Lösungsmittels versetzt und dann oxidiert bis ein Oxidationsgrad ≥ 99,5 % und insbesondere ≥ 99,9 % erreicht ist. Uberraschenderweise wurde festgestellt, daß mit dem erfindungsgemäßen Verfahren ein vollständig oxidiertes Produkt erhalten werden kann. Dies ist darauf zurückzuführen, daß beim erfindungsgemäßen Verfahren, anders als beim Stand der Technik, nicht von einem Polyarylensulfid sondern von einem voroxidierten Gemisch, umfassend ein Polyarylensulfid, Polyarylensulfoxid und Polyarylensulfon ausgegangen wird. Durch die erfindungsgemäße Wahl der Ausgangsmaterialien kann eine vollständige Oxidation zum Polyarylensulfon erzielt werden.

Die erfindungsgemäß als Ausgangsmaterial eingesetzten Gemische umfassend Polyarylensulfid, Polyarylensulfoxid und Polyarylensulfon können nach dem Stand der Technik bekannten Verfahren hergestellt werden. Verfahren, bei denen solche Gemische mit einem Gesamtoxidationsgrad von bis zu maximal 81 % erhalten werden können, sind in DE-43 14 738 A1 und DE-196 36 692 A1 beschrieben. Dabei werden Polyarylensulfide in einer geeigneten Säure, beispielsweise Schwefelsäure, Essigsäure oder/und Ameisensäure mit Wasserstoffperoxid zu einem Gemisch aus Polyarylensulfid, Polyarylensulfoxid und Polyarylensulfon oxidiert. Erfindungsgemäß verwendbare Gemische sind aber auch kommerziell erhältlich, beispielsweise ist ein zu etwa 70 % oxidiertes Polyphenylsulfid unter dem Handelsnamen Ceramer® (Hoechst AG, DE) erhältlich.

Als Polyarylen werden allgemein Polymere bezeichnet, deren Hauptkette aus verknüpften aromatischen Ringen aufgebaut ist. Die Ringe sind dabei hauptsächlich in p-Position verknüpft, es ist jedoch auch möglich, daß ein Teil oder alle Verknüpfungen in Position m und/oder o vorliegen. Polyarylensulfide weisen zusätzlich zu dem aromatischen Bestandteil als charakteristischen Kettenbaustein eine Thioethergruppe auf. Erfindungsgemäß bevorzugt werden Polyarylensulfid/sulfoxid/sulfon-Gemische eingesetzt, die Phenylen, insbesondere meta- oder/und para-verknüpfte Phenylengruppen, Bisphenylen, insbesondere para-Bisphenylen oder/und Naphthylen, insbesondere 1, 5-verknüpte Naphthylengruppen umfassen. Ein bevorzugtes Beispiel für ein Polyarylensulfid ist Polyphenylsulfid.

In Polyarylensulfoxiden, beispielsweise Polyphenylensulfoxid ist die Thioethergruppe durch ein Sauerstoffatom zur Sulfoxidgruppe oxidiert. In Polyarylensulfonen, beispielsweise Polyphenylensulfon ist die Thioethergruppe vollständig zur Sulfongruppe oxidiert.

Die erfindungsgemäß verwendeten Polymere weisen bevorzugt ein mittleres Molekulargewicht von 4000 bis 200.000 g/mol und besonders bevorzugt von 25.000 bis 100.000 g/mol auf. Mit dem erfindungsgemäßen Verfahren ist es insbesondere auch möglich, hochmolekulare, nicht lösliche Ausgangsgemische vollständig zu Polyarylensulfonen zu oxidieren. Bevorzugt wird als Ausgangsmaterial für das erfindungsgemäße Verfahren ein Gemisch, umfassend Polyarylensulfide, Polyarylensulfoxide und Polyarylensulfone verwendet, welches bezogen auf Polyarylensulfid einen Oxidationsgrad von mindestens 40 %, bevorzugt mindestens 70 % und besonders bevorzugt mindestens 80 % aufweist, wobei grundsätzlich jedes voroxidierte Gemisch auf Basis von Polyarylensulfiden eingesetzt werden kann.

Wie hierin verwendet, bezeichnet der Begriff "Oxidationsgrad" den Anteil an oxidierten Schwefelatomen in den Polymeren. Da jedes Schwefelatom einer Sulfidgruppe durch ein Sauerstoffatom zunächst zur Sulfoxidgruppe und durch ein weiteres Sauerstoffatom dann zur Sulfongruppe oxidiert werden kann, trägt jedes Gew.-% an Polyarylsulfon 1 % zum Oxidationsgrad bei, während jedes Gew.-% Polyarylensulfoxid 1/2 % zum Oxidationsgrad beiträgt.

Der Oxidationsgrad kann deshalb folgendermaßen berechnet werden:

$$\text{Oxidationsgrad (in \%)} = \text{Anteil an Polyarylensulfid}$$

$$\text{(Gew.-\%)} \times 0\ \% + \text{Anteil an Polyarylensulfoxid}$$

$$\text{(Gew.-\%)} \times 1/2\ \% + \text{Anteil an Polyarylensulfon}$$

$$\text{(Gew.\%)} \times 1\ \%.$$

Das erfindungsgemäße Verfahren kann auch zur Aufreinigung von technischen Polyarylensulfonen, wie sie beispielsweise in der DE 196 36 692 A1 erhalten werden, verwendet werden, wobei verbleibende Reste an nicht vollständig oxidiertem Polyarylensulfid und Polyarylensulfoxid in dem Ausgangsgemisch durch das erfindungsgemäße Verfahren weiter oxidiert wurden, so daß ein vollständig oxidiertes Polyarylensulfon erhalten wird. Deshalb ist es beim erfindungsgemäßen Verfahren auch möglich, ein Gemisch, umfassend Polyarylensulfid, Polyarylensulfoxid und Polyarylensulfone einzusetzen, welches einen Oxidationsgrad von mindestens 95 %, bevorzugt mindestens 98 % und bis zu mindestens 99 % aufweist.

Bevorzugt wird das Verfahren jedoch mit einem Gemisch, umfassend Polyarylensulfid, Polyarylensulfoxid und Polyarylensulfonen durchgeführt, welches bezogen auf Polyarylensulfon einen Oxidationsgrad von höchstens 95 %, bevorzugt höchstens 90 % und insbesondere höchstens 85 % aufweist.

Das erfindungsgemäß einsetzte Gemisch enthält bevorzugt mindestens 0,5 Gew.-%, mehr bevorzugt mindestens 2 Gew.-%, insbesondere mindestens 5 Gew.-% und am meisten bevorzugt mindestens 10 Gew.-% Polyarylensulfid. Weiterhin enthält das erfindungsgemäß eingesetzte Gemisch jeweils unabhängig voneinander bevorzugt mindestens 0,5 Gew.-%, mehr bevorzugt mindestens 2 Gew.-%, insbesondere mindestens 5 Gew.-%, weiter bevorzugt mindestens 10 Gew.-% und am meisten bevorzugt mindestens 20 Gew.-% an Polyarylensulfoxid bzw. Polyarylensulfon. Bei Verwendung von Gemischen mit höherem Oxidationsgrad weist das Gemisch einen entsprechenden höheren Anteil an Polyarylensulfoxid bzw. Polyarylensulfon auf, welcher mehr als 30 Gew.-%, insbesondere mehr als 40 Gew.-%, bevorzugt mehr als 50 Gew.-% und bis zu mehr als 60 Gew.-% betragen kann.

Als Oxidationsmittel können erfindungsgemäß alle Verbindungen eingesetzt werden, die in der Lage sind, eine Sulfidgruppe zu einer Sulfongruppe zu oxidieren. Bevorzugt werden Wasserstoffperoxid, Wasserstoffperoxid in einer anorganischen oder organischen Säure oder eine organische oder anorganische Persäure, bevorzugt in einer anorganischen oder organischen Säure verwendet. Gemische von anorganischen Säuren, wie etwa Schwefelsäure oder von organischen Säuren, wie etwa Essigsäure oder Ameisensäure, mit Wasserstoffperoxid werden als Gleichgewichtspersäuren bezeichnet. Bei der Verwendung von Wasserstoffperoxid in Schwefelsäure als Oxidationsmittel liegt das Oxidationsmittel in Form der Caroschen Säure vor. Erfindungsgemäß am meisten bevorzugtes Oxidationsmittel ist Wasserstoffperoxid. Als Suspensions- oder/und Lösungsmittel wird bevorzugt Schwefelsäure, insbesondere konzentrierte Schwefelsäure verwendet. Erfindungsgemäß am meisten bevorzugt ist die Verwendung von Wasserstoffperoxid als Oxidationsmittel in Kombination mit Schwefelsäure, insbesondere konzentrierter Schwefelsäure, als Lösungs- bzw. Suspensionsmittel.

Das Oxidationsmittel und insbesondere Wasserstoffperoxid wird in der vorliegenden Erfindung bevorzugt in Form einer 20 bis 85 %-igen wäßrigen Lösung eingesetzt. Die Schwefelsäure wird insbesondere in Form einer 60 bis 100 %-igen Schwefelsäure und bevorzugt als konzentrierte Schwefelsäure in Form einer 90 bis 98 %-igen Lösung eingesetzt.

Das erfindungsgemäße Verfahren wird vorzugsweise in einem wäßrigen Medium durchgeführt.

Das erfindungsgemäße Verfahren ermöglicht die Herstellung von vollständig oxidierten Polyarylensulfonen in Gegenwart von im Vergleich zum Stand der Technik deutlich reduzierten Mengen an Suspensions- bzw. Lösungsmittel. Deshalb wird das Suspensions- oder/und Lösungsmittel, insbesondere Schwefelsäure, bevorzugt in einem Gewichtsverhältnis von weniger als 40:1 zum Gemisch, umfassend Polyarylensulfid, Polyarylensulfoxid und Polyarylensulfon eingesetzt. Durch die Verwendung eines voroxidierten Gemisches, beispielsweise von $PPSO_2$-70 (das ist ein Polyphenylensulfid, Polyphenylensulfoxid und Polyphenylensulfongemisch mit einem Gesamtoxidationsgrad von ca. 70 %, bezogen auf das Sulfid, wobei das Gemisch etwa 2 bis 5 % Polyphenylensulfid, etwa 20 bis 26 % Polyphenylensulfoxid und den Rest Polyphenylsulfon enthält) ist es überraschenderweise möglich, das erfindungsgemäße Verfahren mit im Vergleich zum Stand der Technik deutlich reduzierten Mengen an $H_2SO_4$ durchzuführen. Dadurch entstehen nur geringe Mengen an $H_2SO_4$ - Abfall. Weiterhin werden mit dem erfindungsgemäßen Verfahren hohe Raum Zeit-Ausbeuten erhalten.

Im Gegensatz zu den geringen Suspensions- bzw. Lösungsmittelmengen, insbesondere geringen Schwefelsäuremengen beim erfindungsgemäßen Verfahren, waren beim Stand der Technik deutlich höhere Schwefelsäuremengen erforderlich, um die ansteigende Viskosität während der Umsetzung des Polymers auszugleichen.

Erfindungsgemäß bevorzugt wird das Suspensionsmittel bzw. Lösungsmittel, insbesondere Schwefelsäure in einem Gewichtsverhältnis von weniger als 25:1, insbesondere weniger als 18:1, bevorzugt weniger als 15:1 und besonders bevorzugt weniger als 10:1 zum Gemisch, umfassend Polyarylensulfid, Polyarylensulfoxid und Polyarylensulfon eingesetzt.

Wie oben ausgeführt, ist es erfindungsgemäß auch möglich, das Verfahren zur Aufoxidierung von technischem Polyphenylensulfonen mit einem Restgehalt an Polyphenylensulfid und/oder Polyphenylensulfoxid zu verwenden. In diesem Fall kann das Suspensions- bzw. Lösungsmittel, insbesondere Schwefelsäure, auch in einem Gewichtsverhältnis von weniger als 5:1, insbesondere weniger als 4:1 und bis zu weniger als 1:1 eingesetzt werden.

Üblicherweise hängt die Menge des verwendeten Suspensions- bzw. Lösungsmittels, insbesonder Schwefelsäure vom Oxidationsgrad des eingesetzten Gemisches ab. Je höher der Oxidationsgrad des verwendeten Ausgangsgemisches ist, desto weniger Suspensions- bzw. Lösungsmittel wird benötigt.

Erfindungsgemäß bevorzugt wird das Suspensions- bzw. Lösungsmittel jedoch in einem Gewichtsverhältnis von mehr als 1:1, insbesondere mehr als 2:1 und bevorzugt mehr als 5:1 zum Gemisch, umfassend Polyarylensulfid, Polyarylensulfoxid und Polyarylensulfon, verwendet.

In einer bevorzugten Verfahrensvariante werden das Ausgangsgemisch und das Oxidationsmittel dem Reaktionsansatz portionsweise zugegeben, wodurch die Menge an benötigtem Suspensions- bzw. Lösungsmittel, beispielsweise Schwefelsäure, weiter verringert werden kann. Deshalb werden in einer bevorzugten Ausführungsform des erfindungsgemäßen Verfahrens das Oxidationsmittel und das Gemisch, umfassend Polyarylensulfid, Polyarylensulfoxid und Polyarylensulfon jeweils in wenigstens zwei, bevorzugt wenigstens drei und besonders bevorzugt wenigstens fünf Portionen dem Reaktionsgemisch zugegeben. Die einzelnen Portionen umfassen dabei jeweils mindestens 5 Gew.-% und bevorzugt mindestens 10 Gew.-% der Gesamtzugabemenge der jeweiligen Komponente.

Das erfindungsgemäße Verfahren kann in Abhängigkeit der Wahl der Reaktionskomponenten bei allen Temperaturen durchgeführt werden, bei denen das Oxidationsmittel in der Lage ist, das eingesetzte Polyarylensulfid zum Polyarylensulfon zu oxidieren. Bevorzugt wird das Verfahren bei Temperaturen von -30 °C bis 140 °C und insbesondere bei Temperaturen von 0 °C bis 70 °C durchgeführt. Die Reaktionszeit liegt dabei im allgemeinen im Bereich von 0,5 bis 16 Stunden, bevorzugt 1 bis 5 Stunden. Das erfindungsgemäße Verfahren kann bei vermindertem Druck durchgeführt werden, beispielsweise bei 10 mbar bis 1000 mbar, wobei darauf geachtet werden muß, daß kein $H_2O_2$ in die Gasphase gelangt. Bevorzugt wird das erfindungsgemäße Verfahren jedoch bei Normaldruck durchgeführt. Die entstehende Reaktionsenergie kann dabei durch Kühlung abgeführt werden. Weiterhin kann die Temperatur des Reaktionssystems durch langsame Zugabe der einzelnen Komponenten kontrolliert werden. Vorteilhaft im Hinblick auf die Entwicklung von Reaktionswärme ist es, daß beim erfindungsgemäßen Verfahren unter Verwendung eines voroxidierten Ausgangsgemisches nur noch ein Restanteil an Thioethergruppen oxidiert werden muß, was im Vergleich zum Stand der Technik zu einer geringeren Wärmeentwicklung führt.

Mit dem erfindungsgemäßen Verfahren ist es möglich, ein vollständig oxidiertes Produkt zu erhalten. Folglich wird mit dem Verfahren ein Polyarylensulfon mit einem Oxidationsgrad ≥ 99,5, bevorzugt > 99,8, insbesondere > 99,9 und am meisten bevorzugt > 99,95 hergestellt. Die vollständige Oxidation von Polyarylensulfon ist insbesondere deshalb wichtig, da in dem Produkt verbleibende, nicht oxidierte Restgehalte an Polyarylensulfid oder nur teiloxidierte Reste an Polyarylensulfoxid zu Problemen bei der Verarbeitung führen. Beispielsweise entspricht ein Oxidationsgrad von 99 % einem Restanteil von 2 % Polyarylensulfoxid bzw. 1 % Polyarylensulfid, welche bei erhöhten Temperaturen, wie sie bei der Verarbeitung von Polyarylensulfon verwendet werden, leicht Gas abspalten. Ein Anteil von 1 bis 2 % Polyarylensulfid/Polyarylensulfoxid führt jedoch durch Bildung von Schwefeloxidgasen, insbesondere $SO_2$ zu einem erheblichen Massenverlust in der Größenordnung von 10 bis 12 Gew.-%. Ein solcher Massenverlust ist für viele Anwendungen aber nicht akzeptabel.

Mit dem erfindungsgemäßen Verfahren erhältliches Polyaryfensulfon Zeichnet sich durch einen hohen Oxidationsgrad von > 99,5 %, insbesondere > 99,8 % und besonders bevorzugt > 99,9 % aus. Dieses Polyarylensulfon weist bevorzugt ein mittleres Molekulargewicht von 4000 bis 200.000 g/mol und besonders bevorzugt von 25.000 bis 100.000 g/mol auf. Ein solches Polyarylensulfon kann günstigerweise zur Herstellung von Kunststoffen verwendet werden, da aufgrund der hohen Reinheit kein oder nur ein geringer Massenverlust bei der Verarbeitung, z.B. bei der Herstellung von Formteilen, auftritt.

Die Erfindung wird durch die folgenden Beispiele weiter erläutert.

Beispiel 1

130 g Ceramer® (1 mol; Gemisch aus Polyphenylensulfid, Polyphenylensulfoxid und Polyphenylensulfon mit einem Gesamtoxidationsgrad von 70 %) wurden in 1267 g konzentrierter Schwefelsäure vorgelegt und unter ständiger Kühlung bei einer Temperatur von 30 °C innerhalb von 45 Minuten mit 36,4 g einer 70 %-igen Wasserstoffperoxidlösung (0,75 mol) versetzt. Während der Zugabe verfärbte sich der Reaktionsansatz über dunkelgrün nach beige. Nach beendeter Zugabe wurde der Ansatz von 2 Stunden bei 30 °C nachgerührt. Anschließend wurde der Ansatz auf 3500 ml Eiswasser überführt, wobei Polyphenylensulfon vollständig ausfiel. Das Produkt wurde abfiltriert, mit insgesamt 6000 ml destilliertem Wasser neutralgewaschen und zum Schluß 16 Stunden bei 120 °C im Vakuumtrockenschrank getrocknet.

Ausbeute 131,7 g (entspricht 94 % der Theorie)

| Elementaranalyse des Produktes: | | |
|---|---|---|
| berechnet für ein Polyphenylsulfon mit 100 % Sulfongruppen: | | |
| Theorie | C: 51,4 % | S: 22,9 % |
| gefunden | C: 51,2 % | S: 22,7 % |

Das Elementaranalysenergebnis zeigt, daß ein vollständig, d.h. zu praktisch 100 % oxidiertes Produkt erhalten wurde. Der berechnete Oxidationsgrad von > 100 % (typischerweise 106 bis 108 %) ist dabei auf die verwendete Methode der Elementaranalyse zurückzuführen.

Eine Analyse des erhaltenen Produktes mittels ESCA (Electron Spectroscopy for Chemical Application) zeigte, daß das Produkt vollständig zum Sulfon oxidiert war. Es konnten keine Sulfid- oder/und Sulfoxidgruppen nachgewiesen werden.

Beispiel 2

10 g Ceramer® (0,077 mol; Gemisch aus Polyphenylensulfid, Polyphenylensulfoxid und Polyphenylensulfon mit einem Gesamtoxidationsgrad von ca. 70 %) wurden in 350 g konzentrierter Schwefelsäure vorgelegt und unter ständiger Kühlung bei einer Temperatur von 30 ° C innerhalb von 5 Minuten mit 3,8 g einer 85 %-igen Wasserstoffperoxidlösung (0,095 mol) versetzt. Während der Zugabe verfärbte sich der Reaktionsansatz über dunkelgrün nach beige. Nach beendeter Zugabe wurde der Ansatz noch 15 Minuten bei 30 °C nachgerührt. Unter weiterer Kühlung wurden bei 30 °C weitere 10 g Ceramer® zugesetzt. Nach Zugabe von 3,8 g Wasserstoffperoxidlösung (5 Minuten) wurde erneut 15 Minuten bei 30 °C nachgerührt. Der beschriebene Vorgang wurde noch zweimal mit je 10 g Ceramer® und 4,6 g einer 70 %-igen Wasserstoffperoxidlösung wiederholt. Nach Zugabe einer fünften Portion von 10 g Ceramer® (Gesamtmenge Ceramer® 50 g = 0,38 mol) wurden bei 30 °C innerhalb von 15 Minuten noch 15,2 g einer 85 %-igen Wasserstoffperoxidlösung (Gesamtmenge Wasserstoffperoxid: 30,4 g = 0,72 mol) zugegeben. Nach der letzten Zugabe wurde der Ansatz von 2 Stunden bei 30 °C nachgerührt. Anschließend wurde der Ansatz auf 700 ml Eiswasser überführt, wobei Polyphenylensulfon vollständig ausfiel. Das Produkt wurde abfiltriert, mit insgesamt 2500 ml destilliertem Wasser neutralgewaschen und zum Schluß 16 Stunden bei 120 °C im Vakuumtrockenschrank getrocknet. Ausbeute: 50,1 g (entspricht 93 % der Theorie)

| Elementaranalyse des Produktes: | | |
|---|---|---|
| berechnet für ein Polyphenylensulfon mit 100 % Sulfongruppen: | | |
| Theorie | C: 51,4 % | S: 22,9 % |
| gefunden | C: 50,8 % | S: 22,6 % |

Das Elementaranalysenergebnis entspricht einem Oxidationsgrad von > 100 % (106 bis 108 %) des Produktes.

Die Bestimmung der Oxidationszustände des Schwefels mittels ESCA zeigte, daß das Produkt vollständig zum Sulfon oxidiert war. Es konnten keine Sulfid- oder/und Sulfoxidgruppen nachgewiesen werden.

**Patentansprüche**

1. Verfahren zur Herstellung von Polyarylensulfonen, **dadurch gekennzeichnet, dass** man ein Gemisch umfassend Polyarylensulfide, Polyarylensulfoxide und Polyarylensulfone, welches einen Oxidationsgrad von mindestens 30 % aufweist, mit einem Oxidationsmittel und einem Suspensions- oder/und Lösungsmittel versetzt und dann oxidiert, bis ein Oxidationsgrad ≥ 99,5 % und insbesondere ≥ 99,9 % erreicht ist.

2. Verfahren nach Anspruch 1,
**dadurch gekennzeichnet,**
**dass** als Suspensions- oder/und Lösungsmittel Schwefelsäure in einem Gewichtsverhältnis von weniger als 25:1, insbesondere weniger als 10:1 zum Gemisch, umfassend Polyarylensulfide, Polyarylensulfoxide, Polyarylensulfone eingesetzt wird.

3. Verfahren nach einem der vorhergehenden Ansprüche,
**dadurch gekennzeichnet,**
**dass** das Oxidationsmittel und das Gemisch, umfassend Polyarylensulfid, Polyarylensulfoxid und Polyarylensulfon jeweils in wenigstens zwei Portionen dem Reaktionsgemisch zugegeben werden.

4. Verfahren nach einem der vorhergehenden Ansprüche,
**dadurch gekennzeichnet,**
**dass** man ein Gemisch, umfassend Polyarylensulfide, Polyarylensulfoxide und Polyarylensulfone, welches einen Oxidationsgrad von mindestens 40 % und insbesondere mindestens 70 % aufweist, oxidiert.

5. Verfahren nach einem der vorhergehenden Ansprüche
**dadurch gekennzeichnet,**
**dass** als Oxidationsmittel Wasserstoffperoxid, Wasserstoffperoxid in einer anorganischen oder organischen Säure oder eine organische oder anorganische Persäure verwendet wird.

6. Verfahren nach Anspruch 5,
**dadurch gekennzeichnet,**
**dass** als Oxidationsmittel Wasserstoffperoxid in Gegenwart von Schwefelsäure verwendet wird.

7. Verfahren nach einem der vorhergehenden Ansprüche,
**dadurch gekennzeichnet,**
**dass** das Reaktionsgemisch Wasser enthält.

8. Verfahren nach einem der vorhergehenden Ansprüche,
**dadurch gekennzeichnet,**
**dass** die Oxidation bei einer Temperatur von -30 °C bis 140 °C durchgeführt wird.

**EP 1 080 131 B1**

**Claims**

1. Process for producing polyarylene sulphones,
   **characterized in that**
   an oxidizing agent and a suspending agent or/and solvent are added to a mixture comprising polyarylene sulphides, polyarylene sulphoxides and polyarylene sulphones which has a degree of oxidation of at least 30 % and then said mixture is oxidized until a degree of oxidation of ≥ 99.5 % and in particular of ≥ 99.9 % is achieved.

2. Process as claimed in claim 1,
   **characterized in that**
   sulphuric acid is used as a suspending agent or/and solvent in a weight ratio of less than 25:1, in particular of less than 10:1 relative to the mixture comprising polyarylene sulphides, polyarylene sulphoxides and polyarylene sulphones.

3. Process as claimed in one of the previous claims,
   **characterized in that**
   the oxidizing agent and the mixture comprising polyarylene sulphide, polyarylene sulphoxide and polyarylene sulphone are each added to the reaction mixture in at least two portions.

4. Process as claimed in one of the previous claims,
   **characterized in that**
   a mixture comprising polyarylene sulphides, polyarylene sulphoxides and polyarylene sulphones which has a degree of oxidation of at least 40 % and in particular of at least 70 % is oxidized.

5. Process as claimed in one of the previous claims,
   **characterized in that**
   hydrogen peroxide, hydrogen peroxide in an inorganic or organic acid or an organic or inorganic peracid is used as the oxidizing agent.

6. Process as claimed in claim 5,
   **characterized in that**
   hydrogen peroxide in the presence of sulphuric acid is used as the oxidizing agent.

7. Process as claimed in one of the previous claims,
   **characterized in that**
   the reaction mixture contains water.

8. Process as claimed in one of the previous claims,
   **characterized in that**
   the oxidation is carried out at a temperature of -30°C to 140°C.


**Revendications**

1. Procédé de préparation de polyarylènesulfones, **caractérisé en ce que** l'on ajoute un agent d'oxydation et un agent de suspension et/ou un solvant à un mélange comprenant des poly(sulfures d'arylène), des polyarylènesulfoxydes et des polyarylènesulfones, qui présente un degré d'oxydation d'au moins 30 %, que l'on oxyde ensuite jusqu'à l'obtention d'un degré d'oxydation ≥ 99,5 % et en particulier ≥ 99,9 %.

2. Procédé selon la revendication 1, **caractérisé en ce que** l'on utilise comme agent de suspension et/ou solvant de l'acide sulfurique en un rapport en masse inférieur à 25:1, en particulier inférieur à 10:1 par rapport au mélange comprenant des poly(sulfures d'arylène), des polyarylènesulfoxydes, des polyarylènesulfones.

3. Procédé selon l'une des revendications précédentes, **caractérisé en ce que** l'on ajoute au mélange réactionnel l'agent d'oxydation et le mélange comprenant un poly(sulfure d'arylène), un polyarylènesulfoxyde et une polyarylènesulfone en au moins deux portions chacun.

4. Procédé selon l'une des revendications précédentes, **caractérisé en ce que** l'on oxyde un mélange comprenant

7

des poly(sulfures d'arylène), des polyarylènesulfoxydes et des polyarylènesulfones qui présente un degré d'oxydation d'au moins 40 % et en particulier d'au moins 70 %.

5. Procédé selon l'une des revendications précédentes, **caractérisé en ce que** l'on utilise comme agent d'oxydation du peroxyde d'hydrogène, du peroxyde d'hydrogène dans un acide inorganique ou organique ou un peracide organique ou inorganique.

6. Procédé selon la revendication 5, **caractérisé en ce que** l'on utilise comme agent d'oxydation du peroxyde d'hydrogène en présence d'acide sulfurique.

7. Procédé selon l'une des revendications précédentes, **caractérisé en ce que** le mélange réactionnel contient de l'eau.

8. Procédé selon l'une des revendications précédentes, **caractérisé en ce que** l'oxydation est effectuée à une température de -30°C à 140°C.